# FASCICULE DE BREVET EUROPEEN

(11) **EP 4 504 526 B1**
(45) Date de publication et mention de la délivrance du brevet: **28.01.2026**
(21) Numéro de dépôt: 23709687.0
(22) Date de dépôt: 06.03.2023
(51) Int. Cl.: B60C 5/14, B60C 9/02, B60C 17/00, B60C 13/00

(54) **PNEUMATIQUE À HAUTE CAPACITÉ DE CHARGEMENT COMPRENANT UN INSERT DE RIGIDIFICATION DE FLANC**
REIFEN MIT HOHER LASTKAPAZITÄT MIT SEITENWANDVERSTEIFUNGSEINSATZ
HIGH LOAD CAPACITY TYRE COMPRISING A SIDEWALL STIFFENING INSERT

(30) Priorité: 08.04.2022 FR 2203235
(43) Date de publication de la demande: 12.02.2025
(73) Titulaire: COMPAGNIE GENERALE DES ETABLISSEMENTS MICHELIN, 63000 Clermont-Ferrand (FR)
(72) Inventeur: VILPERT, Benjamin, 63040 CLERMONT-FERRAND CEDEX 09 (FR); FRAISSE, Dominique, 63040 CLERMONT-FERRAND CEDEX 09 (FR)
(74) Mandataire: M.F.P. Michelin
(86) Numéro de dépôt international: PCT/EP2023/055622
(87) Numéro de publication internationale: WO 2023/194022

(56) Documents cités:
- EP-A1- 2 228 236
- EP-A1- 2 695 752
- EP-A2- 2 507 078
- FR-A1- 3 005 438
- JP-A- 2007 276 587

## Description

La présente invention concerne un pneumatique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

L'avènement des véhicules de tourisme à motorisation électrique ou hybride entraine une augmentation du poids des véhicules, notamment en raison des batteries dont le poids est relativement important et sensiblement proportionnel à l'autonomie des véhicules. Ainsi, par exemple, pour augmenter l'autonomie d'un véhicule électrique, il est nécessaire d'augmenter la taille des batteries et par conséquent, le poids du véhicule.

De façon simple, on estime aujourd'hui qu'un kilomètre d'autonomie d'un moteur électrique conduit à augmenter le poids du véhicule d'un kilogramme. Ainsi, afin d'atteindre une autonomie de 500 kilomètres, il est nécessaire d'augmenter le poids d'un véhicule à motorisation thermique d'environ 500 kg. Afin d'équiper de tels véhicules, il est nécessaire d'utiliser des pneumatiques capables de porter une charge très élevée.

On connait de l'état de la technique un pneumatique pour véhicule de tourisme, ce pneumatique étant capable de porter une charge relativement élevée. Ce pneumatique est commercialisé sous la marque MICHELIN^{™} dans la gamme Pilot Sport 4 et présente une dimension 255/35R18. Ce pneumatique présente une version EXTRA-LOAD (en abrégé XL et dont la traduction en français serait Pneumatique à Capacité de Charge Supplémentaire) au sens du manuel de la norme ETRTO 2019 et, dans cette version EXTRA-LOAD, présente un indice de charge égal à 94. Cela signifie que, à une pression de 290 kPa, le pneumatique est capable de porter une charge de 670 kg. Cette capacité de charge est relativement élevée par rapport à un pneumatique de même dimension et qualifié de STANDARD LOAD (en abrégé SL et dont la traduction en français serait Pneumatique à Capacité de Charge Normale) présentant un indice de charge égal à 90 et qui est capable lui, de porter une charge de 600 kg à une pression de 250 kPa.

Afin de pouvoir être mis sur le marché, un tel pneumatique doit satisfaire des tests règlementaires. Par exemple en Europe, le pneumatique doit satisfaire à l'essai de performance charge/vitesse décrit en annexe VII du Règlement n°30 de la CEE-ONU.

Néanmoins, que ce soit dans sa version EXTRA-LOAD, et encore plus dans sa version STANDARD LOAD, un tel pneumatique n'est pas capable de porter le surplus de charge correspondant aux batteries nécessaires pour atteindre l'autonomie souhaitée. Ainsi, les manufacturiers pneumatiques ont dû proposer de nouvelles solutions afin de répondre à ce nouveau besoin.

Une solution envisagée par les manufacturiers pneumatiques est, pour un véhicule donné, l'utilisation de pneumatiques présentant une dimension plus importante ce qui permettrait de porter plus de charge. Ainsi, un véhicule donné pourrait être équipé de pneumatiques présentant un indice de charge plus élevé. Par exemple, un véhicule équipé des pneumatiques décrits ci-dessus dans leur version EXTRA LOAD pourrait être équipé de pneumatiques de dimension 275/35R19 dans leur version EXTRA-LOAD qui présentent un indice de charge égal à 100 et capable, à une pression de 290 kPa, de porter une charge de 800 kg, bien supérieure à la charge de 670 kg.

D'une part, une telle augmentation de la dimension des pneumatiques entraine nécessairement soit une réduction de l'espace intérieur du véhicule, soit un agrandissement du gabarit extérieur du véhicule, ce qui, dans les deux cas n'est pas souhaitable pour des raisons d'habitabilité et de compacité du véhicule.

D'autre part, une telle augmentation de la dimension des pneumatiques entraine une nouvelle conception du châssis du véhicule, ce qui pour des raisons évidentes de coûts, n'est pas non plus souhaitable.

Enfin, une telle augmentation de la dimension des pneumatiques, notamment de la largeur de section nominale, entraine une hausse du bruit extérieur généré par le pneumatique ainsi qu'une hausse de la résistance au roulement, ce qui n'est pas non plus souhaitable si on souhaite réduire les nuisances sonores et la consommation énergétique du véhicule.

Ainsi, une autre solution envisagée par les manufacturiers pneumatiques est, pour une dimension donnée et une version donnée d'un pneumatique, d'augmenter sa pression recommandée de gonflage. En effet, plus la pression est élevée, plus le pneumatique est capable de porter une charge élevée.

Néanmoins, l'utilisation d'une pression recommandée relativement élevée rigidifie le pneumatique et entraine une perte de confort pour les passagers du véhicule ce qui n'est évidemment pas souhaité par certains constructeurs automobiles dans les cas où le confort des passagers est prioritaire sur la charge pouvant être portée.

Ainsi, les manufacturiers pneumatiques ont décidé de créer un nouveau type de pneumatique. Ce nouveau type est désormais connu sous la dénomination « HIGH LOAD CAPACITY » (dont la traduction en français est Haute Capacité de Chargement) dans le manuel de la norme ETRTO 2021. Ce nouveau type permet de garantir que la charge qu'est capable de porter le pneumatique d'une dimension donnée est supérieure à celle qu'un pneumatique de même dimension mais dans sa version EXTRA-LOAD serait capable de porter. Pour la dimension 255/35R18, le pneumatique de type HIGH LOAD CAPACITY présente ainsi un indice de charge égal à 98 indiquant qu'il est capable de porter une charge de 750 kg à une pression de 290 kPa.

Un problème rencontré est lié au fait que pour une même dimension, un pneumatique de type HIGH LOAD CAPACITY est amené à porter une charge relativement élevée, cette charge relativement élevée entrainant une détérioration du comportement du véhicule, notamment lors de la mise en lacet du véhicule.

Des pneumatiques de l'état de la technique sont connus de EP2695752A1 et FR3005438A1.

Ainsi, l'invention a pour but de conférer un comportement satisfaisant au véhicule équipé de pneumatiques de type HIGH LOAD CAPACITY.

A cet effet, l'invention a pour objet un pneumatique pour véhicule de tourisme comprenant un sommet, deux bourrelets, deux flancs reliant chaque bourrelet au sommet, le pneumatique étant du type HIGH LOAD CAPACITY selon le manuel de la norme ETRTO 2021, le pneumatique comprenant un insert de flanc agencé axialement entre une surface externe d'au moins un des flancs et une surface interne dudit flanc, l'insert de flanc comprenant au moins une composition élastomérique dite rigide, la ou chaque composition élastomérique rigide de l'insert de flanc présentant un module à 10% d'extension supérieur ou égal à 6 MPa, l'épaisseur maximale de la composition élastomérique rigide ou de l'assemblage des compositions élastomériques rigides étant inférieure ou égale à 5,0 mm.

Afin de réaliser l'invention, les inventeurs ont dû comprendre pourquoi le comportement obtenu n'était pas satisfaisant. Après de nombreux essais, les inventeurs ont déterminé que les flancs du pneumatique forment une portion flexible comprise entre deux portions rigides formées, d'une part, par l'armature de sommet et, d'autre part, par chaque bourrelet.

Ainsi, dans le cas où un effort important est exercé sur le pneumatique, notamment dans le cas où le pneumatique est fortement chargé, les portions rigides formées par l'armature de sommet et les bourrelets transmettent une proportion relativement importante de cet effort à la partie la moins rigide du pneumatique, ici chaque flanc. Or, comme chaque flanc est agencé radialement entre chaque bourrelet et le sommet, chaque flanc ploie avec une amplitude relativement importante d'où le comportement dégradé.

Une fois la raison du comportement comprise, les inventeurs à l'origine de l'invention ont dû également trouver la solution technique permettant de conférer un comportement satisfaisant au véhicule équipé de pneumatiques de type HIGH LOAD CAPACITY.

Ainsi, les inventeurs ont découvert que l'utilisation d'un insert de flanc présentant une rigidité relativement importante, en tout cas supérieure à la rigidité des compositions élastomériques habituellement présentes dans les flancs des pneumatiques, permettait de réduire l'amplitude de la flexion de chaque flanc. Ainsi, on améliore le comportement du véhicule.

Par ailleurs, l'utilisation d'un insert de flanc conformément à l'invention présente l'avantage de présenter un meilleur compromis entre son coût de fabrication et son effet sur le comportement contrairement à d'autres solutions comme, par exemple, l'utilisation d'une armature de carcasse renforcée. En effet, l'insert de flanc remplaçant au moins en partie un matériau déjà existant dans le flanc du pneumatique, le coût de fabrication du pneumatique selon l'invention n'est pas significativement augmenté par rapport à un pneumatique dépourvu de l'insert de flanc.

Concernant le module à 10% d'extension, couramment appelé MA10, il s'agit du module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON^{®}, à une température de 23°C, et une humidité relative de 50% (Norme ISO 23529). Les conditions de mesure et d'exploitation des résultats pour déterminer l'allongement et la contrainte sont telles que décrites dans la norme NF ISO 37:2012-03. On détermine la contrainte pour un allongement de 0.1 et on calcule le module d'élasticité sous tension à 10 % d'allongement en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans le pneumatique.

La composition élastomérique de l'insert de flanc est à base d'un ou de plusieurs élastomère(s). Elle peut également comprendre des charges et d'autres composants habituellement utilisés dans le domaine des compositions pour pneumatiques.

Le pneumatique selon l'invention n'est pas un pneumatique adapté pour un roulage à plat. Un pneumatique adapté pour un roulage à plat est adapté pour un roulage lors duquel la pression de la cavité interne du pneumatique est égale à la pression atmosphérique (par abus de langage, on dit souvent que la pression est nulle alors que c'est la surpression par rapport à la pression atmosphérique qui est nulle). Un pneumatique adapté pour un roulage à plat comprend des flancs autoporteurs, c'est-à-dire capables de porter, en présence d'une pression égale à la pression atmosphérique, la même charge, par exemple la charge nominale telle qu'indiquée dans le manuel de la **norme de la** European Tyre and Rim Technical Organisation ou « ETRTO », 2021, que le pneumatique est capable de porter lorsqu'il est gonflé à sa pression habituelle de gonflage, par exemple sa pression nominale de gonflage telle qu'indiquée dans le manuel de la norme ETRTO, 2021, et ce pendant un kilométrage supérieur ou égal à un certain seuil à une vitesse supérieure ou égale à 80 km/h. Un pneumatique adapté pour un roulage à plat présente préférentiellement un marquage spécifique indiquant la capacité du pneumatique à rouler à plat. Ainsi par exemple, les marquages sous forme des acronymes suivants sont utilisés, sans que cette liste soit limitative : « ZP » pour « Zero Pressure », « SST » pour « Self Supporting Technology », « SSR » pour « Self Supporting Runflat Tire », « RF » pour « Run Flat », « RFT » pour « Run Flat Tire», « EXT » pour « EXTended», « ZP-SR » pour « Zero Pressure Short Range » ou encore « ZPS » pour « Zero Pressure System ». Un autre marquage spécifique indiquant la capacité du pneumatique à rouler à plat est la présence de la lettre « F » dans la dimension du pneumatique. Ainsi, des pneumatiques présentant les dimensions 225/40R18 ou 225/40ZR18, présentent, s'ils sont adaptés pour un roulage à plat les marquages 225/40RF18 ou 225/40ZRF18.

Conformément à l'invention, le pneumatique est pour véhicule de tourisme. Un tel pneumatique est par exemple défini dans le manuel de la norme ETRTO 2021 (European Tyre and Rim Technical Organisation). Un tel pneumatique présente, généralement sur au moins un des flancs, un marquage conforme au marquage du manuel de la norme ETRTO 2021 indiquant la dimension du pneumatique sous la forme X/Y α V U β avec X désignant la largeur de section nominale, Y désignant le rapport d'aspect nominal, α désignant la structure et pouvant être R ou ZR, V désignant le diamètre de jante nominale, U désignant l'indice de charge et β désignant le symbole de vitesse.

En augmentant l'indice de charge du pneumatique par rapport à l'indice de charge d'un pneumatique présentant la même dimension dans sa version EXTRA-LOAD, l'invention permet d'augmenter la capacité de charge du pneumatique sans pour autant modifier l'habitabilité, la compacité et le confort du véhicule sur lequel il est utilisé. En effet, la dimension du pneumatique de l'invention étant identique à celle du pneumatique dans sa version EXTRA-LOAD, le pneumatique n'encombre pas davantage que le pneumatique dans sa version EXTRA-LOAD. Un pneumatique de l'invention pourra porter un marquage distinctif permettant de le distinguer de sa version STANDARD LOAD et de sa version EXTRA-LOAD, par exemple un marquage du type HL (pour HIGH LOAD) ou XL+ (pour EXTRA LOAD +). Un tel marquage est notamment divulgué dans le manuel de la norme ETRTO 2021, page 3 de la section General Notes - Passenger Car tyres pour désigner des pneumatiques de type HIGH LOAD CAPACITY. Des exemples de dimensions sont également divulgués dans le manuel de la norme ETRTO 2021, page 44, paragraphe 9.1 de la section Passenger Car tyres - Tyres with metric designation.

Un pneumatique de type HIGH LOAD CAPACITY peut être caractérisé par son indice de charge LI tel que LI ≥ LI'+1 et LI' étant l'indice de charge d'un pneumatique EXTRA LOAD présentant la même dimension selon le manuel de la norme ETRTO 2021. L'indice de charge LI' est l'indice de charge d'un pneumatique EXTRA-LOAD présentant la même dimension, c'est-à-dire la même largeur de section nominale, le même rapport d'aspect nominal, la même structure (R et ZR étant considérée comme identique) et le même diamètre de jante nominale. L'indice de charge LI' est donné par le manuel de la norme ETRTO 2021, notamment dans la partie intitulée Passenger Car Tyres - Tyres with Metric Designation, pages 22 à 43. En fonction de la dimension, on aura LI=LI'+1, LI=LI'+2, LI=LI'+3 ou bien encore LI=LI'+4. Dans la plupart des modes de réalisation, LI'+1 ≤ LI ≤ LI'+4, et même LI'+2 ≤ LI ≤ LI'+4.

L'épaisseur maximale de la composition élastomérique rigide ou de l'assemblage des compositions élastomériques rigides est la valeur maximale des épaisseurs de la composition élastomérique rigide ou de l'assemblage des compositions élastomériques rigides, l'épaisseur pouvant être constante ou variable. Une épaisseur de la composition élastomérique rigide ou de l'assemblage des compositions élastomériques rigides est définie, dans un plan de coupe méridien, comme l'épaisseur de la composition élastomérique rigide ou de l'assemblage des compositions élastomériques rigides en un point de la surface interne du pneumatique. L'épaisseur de la composition élastomérique rigide ou de l'assemblage des compositions élastomériques rigides en ce point de la surface interne est la distance droite selon la normale à la surface interne audit point de la surface interne entre le point le plus radialement intérieur de la composition élastomérique rigide ou de l'assemblage des compositions élastomériques rigides et le point le plus radialement extérieur de la composition élastomérique rigide ou de l'assemblage des compositions élastomériques rigides, ces points de l'insert de flancs étant alignés selon la normale avec ledit point de la surface interne.

La surface interne délimite la cavité interne du pneumatique. La cavité interne est destinée à être pressurisée par le gaz de gonflage une fois le pneumatique monté sur un support de montage, par exemple une jante. La surface interne du flanc est donc la partie du flanc délimitant la cavité interne du pneumatique.

La surface externe est la surface du pneumatique en contact avec l'air à pression atmosphérique et visible depuis l'extérieur du pneumatique. La surface externe du flanc est donc la partie du flanc en contact avec l'air à pression atmosphérique et visible depuis l'extérieur du pneumatique.

Dans un mode de réalisation préféré, le ou chaque insert de flanc comprend une composition élastomérique rigide. Dans certaines variantes, le ou chaque insert de flanc est constitué d'une composition élastomérique rigide. Dans d'autres variantes, le ou chaque insert de flanc comprend une composition élastomérique rigide et une ou plusieurs composition(s) élastomérique(s), dite(s) souple(s), dont le module à 10% d'extension est strictement inférieur à 6 MPa. Dans ces modes de réalisation, l'épaisseur maximale est l'épaisseur de la composition élastomérique rigide.

Néanmoins, dans d'autres modes de réalisation, on pourra envisager que le ou chaque insert de flanc comprend plusieurs compositions élastomériques rigides. Dans ces modes de réalisation, l'épaisseur maximale est l'épaisseur maximale de l'assemblage des compositions élastomériques rigides, c'est-à-dire la valeur maximale de la somme des épaisseurs de chaque composition élastomérique rigide mesurées selon une même normale à la surface interne du pneumatique. Dans certaines variantes de ces modes de réalisation comprenant plusieurs compositions élastomériques rigides, toutes les compositions élastomériques de l'insert de flanc sont des compositions élastomériques rigides. Dans d'autres variantes de ces modes de réalisation comprenant plusieurs compositions élastomériques rigides, l'insert de flanc comprend, en plus des compositions élastomériques rigides, une ou plusieurs composition(s) élastomérique(s), dites souple(s), dont le module à 10% d'extension est strictement inférieur à 6 MPa. Dans ces autres variantes, l'épaisseur maximale ne tient pas compte de l'épaisseur de la ou chaque composition élastomérique souple, l'épaisseur maximale étant définie comme l'épaisseur maximale de l'assemblage des compositions élastomériques rigides.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par surface circonférentielle équatoriale du pneumatique, on entend l'association des plans passant, dans chaque plan de coupe méridien, par l'équateur (noté E) du pneumatique et perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et situé à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage. Ainsi, l'extrémité radialement extérieure de la surface externe du bourrelet du pneumatique est définie comme le point de la surface externe du pneumatique radialement le plus extérieur en contact avec une jante de mesure du pneumatique selon le manuel de la norme ETRTO, 2021 lorsque le pneumatique est gonflé à sa pression nominale sur cette jante de mesure.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques sont, dans certains modes de réalisation préférés de l'invention, destinés à des véhicules de tourisme tels que définis au sens du manuel de la norme ETRTO, 2021. Un tel pneumatique présente une section dans un plan de coupe méridien caractérisée par une hauteur de section H et une largeur de section nominale ou grosseur boudin S au sens du manuel de la norme ETRTO, 2021 telles que, de façon optionnelle, le rapport H/S, exprimé en pourcentage, est au plus égal à 90, de préférence au plus égal à 50 et plus préférentiellement au plus égal à 40 et est au moins égal à 20, de préférence au moins égal à 25, et la largeur de section nominale S est au moins égale à 155 mm, de préférence au moins égale à 205 mm et plus préférentiellement au moins égale à 225 mm et au plus égal à 385 mm, de préférence au plus égal à 335. En outre le diamètre au crochet D, définissant le diamètre de la jante de montage du pneumatique, est au moins égal à 12 pouces, de préférence au moins égal à 16 pouces et au plus égal à 24 pouces.

Dans un mode de réalisation optionnel, chaque flanc comprend un insert de flanc agencé axialement entre la surface externe dudit flanc et la surface interne dudit flanc, chaque insert de flanc comprenant au moins une composition élastomérique dite rigide, la ou chaque composition élastomérique rigide de chaque insert de flanc présentant un module à 10% d'extension supérieur ou égal à 6 MPa, l'épaisseur maximale de la composition élastomérique rigide ou de l'assemblage de compositions élastomériques rigides de chaque insert de flanc étant inférieure ou égale à 5,0 mm.

Ainsi, dans une première variante, on pourra avoir deux inserts de flancs agencés dans les deux flancs du pneumatique, ces deux inserts de flanc présentant la même épaisseur maximale et la ou les même(s) composition(s) élastomérique(s) rigide(s).

Dans une deuxième variante, on pourra avoir deux inserts de flancs agencés dans les deux flancs du pneumatique, ces deux inserts de flanc présentant des épaisseurs maximales différentes et/ou une ou des composition(s) élastomérique(s) rigide(s) présentant des modules à 10% d'extension différents. En particulier, dans le cas où le pneumatique présente un sens de montage indiquant un côté extérieur et un côté intérieur pour son montage sur un véhicule, on privilégiera le cas dans lequel l'insert du flanc destiné à être sur le côté extérieur présente une épaisseur maximale et/ou une ou des composition(s) élastomérique(s) rigide(s) présentant un module à 10% d'extension supérieur à celles de l'insert du flanc destiné à être sur le côté intérieur.

Dans des modes de réalisation avantageux, le module à 10% d'extension de la ou chaque composition élastomérique rigide est inférieur ou égal à 20 MPa, de préférence à 15 MPa et plus préférentiellement à 13 MPa. Bien qu'améliorant le comportement du véhicule, une rigidité trop élevée peut néanmoins réduire le confort du véhicule. En outre, une rigidité trop élevée peut dégrader la mise à plat ce qui entraine une réduction de la surface de l'aire de contact. Ainsi, il est préférable de ne pas utiliser un insert de flanc trop rigide.

Dans des modes de réalisation avantageux, l'épaisseur maximale de la composition élastomérique rigide ou de l'assemblage des compositions élastomériques rigides va de 1,0 à 5,0 mm, de préférence de 1,0 à 3,5 mm et plus préférentiellement de 1,0 à 2,5 mm et encore plus préférentiellement de 1,2 à 1,7 mm. Bien que présentant une rigidité significativement supérieure aux rigidités des compositions habituellement utilisées dans les flancs des pneumatiques, plus l'épaisseur maximale est importante, plus on améliore le comportement du véhicule. Néanmoins, au-delà d'une épaisseur maximale trop importante, on détériore d'une part, le confort du véhicule, et d'autre part, la mise à plat ce qui entraine une réduction de la surface de l'aire de contact.

Dans des modes de réalisation également avantageux, le ou chaque flanc présentant une épaisseur minimale en un point I, l'épaisseur du flanc en un point de la surface interne étant définie comme la distance droite selon la normale à la surface interne audit point de la surface interne entre ledit point de la surface interne et un point de la surface externe du pneumatique aligné selon la normale avec ledit point de la surface interne,
le point de la surface interne auquel l'épaisseur de la composition élastomérique rigide ou de l'assemblage des compositions élastomériques rigides est maximale est agencé radialement entre :
- une droite radialement extérieure formée par la normale à la surface interne passant par un point de la surface interne agencé 10 mm radialement à l'extérieur du point I,
- une droite radialement intérieure formée par la normale à la surface interne passant par un point de la surface interne agencé 10 mm radialement à l'intérieur du point I.

En d'autres termes, l'épaisseur de la composition élastomérique rigide ou de l'assemblage des compositions élastomériques rigides est maximale à proximité de la zone dans laquelle le flanc présente l'épaisseur la plus faible. En effet, à rigidité égale, le flanc ploie le plus là où il présente une épaisseur la plus faible. Ainsi, il est avantageux, pour améliorer efficacement le comportement du véhicule, de rigidifier le flanc dans cette zone potentielle de forte flexion.

Optionnellement, l'épaisseur de la composition élastomérique rigide ou de l'assemblage des compositions élastomériques rigides est maximale radialement à l'extérieur de l'équateur du pneumatique.

Dans des modes de réalisation avantageux, l'extrémité radialement extérieure de l'insert de flanc est agencée radialement à l'extérieur de l'équateur du pneumatique.

Avantageusement et optionnellement, l'extrémité radialement extérieure de l'insert de flanc est agencée radialement et axialement à l'intérieur d'une droite normale à la surface interne et passant par l'extrémité axialement extérieure de la couche de sommet axialement la plus large de l'armature de sommet.

En effet, en s'étendant au-delà de l'extrémité axialement extérieure de la couche de sommet axialement la plus large, l'insert de flanc aurait pour effet d'augmenter inutilement la masse et la résistance au roulement du pneumatique.

Dans des modes de réalisation, l'extrémité radialement extérieure est l'extrémité radialement extérieure de la composition élastomérique rigide ou l'extrémité radialement la plus extérieure des extrémités radialement extérieures des compositions élastomériques rigides de l'assemblage. Dans d'autres modes de réalisation, l'extrémité radialement extérieure est l'extrémité radialement la plus extérieure des extrémités radialement extérieures des compositions élastomériques, rigides ou souples, de l'insert.

Dans des modes de réalisation également avantageux, l'extrémité radialement intérieure de l'insert de flanc est agencée radialement à l'intérieur de l'équateur du pneumatique.

Avantageusement et optionnellement, l'extrémité radialement intérieure de l'insert de flanc est agencée radialement et axialement à l'extérieur d'une droite normale à la surface interne et passant par l'extrémité radialement extérieure de la surface externe du bourrelet du pneumatique.

En effet, il est inutile que l'insert de flanc s'étende radialement trop vers l'intérieur, notamment dans le bourrelet, cette zone du pneumatique étant, comme indiqué dans le préambule, déjà suffisamment rigide. On ne ferait alors qu'alourdir inutilement le pneumatique.

Dans des modes de réalisation, l'extrémité radialement intérieure est l'extrémité radialement intérieure de la composition élastomérique rigide ou l'extrémité radialement la plus intérieure des extrémités radialement intérieures des compositions élastomériques rigides de l'assemblage. Dans d'autres modes de réalisation, l'extrémité radialement intérieure est l'extrémité radialement la plus intérieure des extrémités radialement intérieures des compositions élastomériques, rigides ou souples, de l'insert.

De façon optionnelle mais avantageuse, le ou chaque insert de flanc présente une section en forme générale de croissant. Ainsi, la largeur de la section de l'insert de flanc est minimale à ses extrémités radialement intérieure et extérieure et est maximale entre ces dernières.

De façon optionnelle, le pneumatique comprend une armature de carcasse comprenant au moins une couche de carcasse ancrée dans le ou chaque bourrelet et s'étendant radialement dans le ou chaque flanc et axialement dans le sommet radialement intérieurement à l'armature de sommet.

Optionnellement, la ou chaque couche de carcasse est délimitée axialement par deux extrémités axiales et comprend des éléments de renfort de carcasse s'étendant axialement d'une extrémité axiale à l'autre de ladite couche de carcasse selon une direction principale formant, de façon optionnelle et préférée, avec la direction circonférentielle du pneumatique, un angle, en valeur absolue, supérieur ou égal à 60°, de préférence allant de 80° à 90°.

Dans certains modes de réalisation, le pneumatique comprend une couche interne d'étanchéité portant la surface interne du pneumatique, l'insert de flanc est agencé axialement entre la couche interne d'étanchéité et la couche de carcasse axialement la plus intérieure.

Dans d'autres modes de réalisation, on pourra envisager que l'insert de flanc est agencé axialement entre la couche de carcasse axialement la plus extérieure et la surface externe du pneumatique.

Dans certaines variantes, l'armature de carcasse comprend une unique couche de carcasse ancrée dans le ou chaque bourrelet et s'étendant radialement dans chaque flanc et axialement dans le sommet radialement intérieurement à l'armature de sommet. Dans ces variantes, l'invention permet notamment d'éviter l'ajout d'une deuxième couche de carcasse ou bien encore l'utilisation d'éléments de renfort de carcasse renforcés afin d'améliorer le comportement du véhicule. Par unique couche de carcasse ancrée dans le ou chaque bourrelet, on comprend que l'armature de carcasse est, à l'exception de la couche de carcasse, dépourvue de toute couche renforcée par des éléments de renfort et ancrée dans le ou chaque bourrelet. Les éléments de renfort de telles couches renforcées exclues de l'armature de carcasse du pneumatique comprennent les éléments de renfort métalliques et les éléments de renfort textiles. De façon très préférentielle, l'armature de carcasse est constituée par l'unique couche de carcasse. Encore plus préférentiellement, le pneumatique est dépourvu de couche de renfort de flanc telle que défini ci-dessous.

Dans une première configuration de l'armature de carcasse comprenant une unique couche de carcasse, la couche de carcasse ancrée dans chaque bourrelet forme un enroulement autour d'un élément de renforcement circonférentiel de chaque bourrelet de sorte qu'une portion axialement intérieure de la couche de carcasse ancrée dans chaque bourrelet est agencée axialement à l'intérieur d'une portion axialement extérieure de la couche de carcasse ancrée dans chaque bourrelet.

Dans une deuxième configuration de l'armature de carcasse comprenant une unique couche de carcasse, chaque bourrelet comprend un élément de renforcement circonférentiel axialement intérieur agencé axialement à l'intérieur de la couche de carcasse et un élément de renforcement circonférentiel axialement extérieur agencé axialement à l'extérieur de la couche de carcasse, par exemple comme cela est décrit dans WO2021/123522.

Dans d'autres variantes, l'armature de carcasse comprend des première et deuxième couches de carcasse ancrées dans le ou chaque bourrelet et s'étendant radialement dans chaque flanc et axialement dans le sommet radialement intérieurement à l'armature de sommet, l'insert de flanc est agencé axialement à l'intérieur de la première couche de carcasse. Dans ces autres variantes, l'invention permet notamment d'éviter l'utilisation d'une couche de renforcement de flanc ou l'utilisation d'éléments de renfort de carcasse renforcés afin d'améliorer le comportement du véhicule. Également, on améliore la performance du pneumatique au test réglementaire d'énergie de rupture ou « Breaking Energy Test » en anglais en raison de la présence des deux couches de carcasse dans le sommet du pneumatique.

Comme décrit ci-dessus, on pourra envisager d'agencer axialement l'insert de flanc à l'intérieur de la couche de carcasse axialement la plus intérieure. On pourra également envisager d'agencer axialement l'insert de flanc entre la première couche de carcasse et la deuxième couche de carcasse.

Dans une première configuration de l'armature de carcasse comprenant des première et deuxième couches de carcasse, la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et chaque extrémité axiale de la deuxième couche de carcasse est agencée radialement à l'intérieur de chaque extrémité axiale de la première couche.

Dans une première variante de la première configuration, chaque extrémité axiale de la deuxième couche de carcasse est agencée axialement entre les portions axialement intérieure et extérieure de la première couche de carcasse. Dans cette variante, la deuxième couche de carcasse est agencée radialement à l'extérieur de la première couche de carcasse dans le sommet.

Dans une deuxième variante de la première configuration, chaque extrémité axiale de la deuxième couche de carcasse est agencée axialement à l'intérieur de chaque portion axialement intérieure de la première couche de carcasse. Dans cette variante, la deuxième couche de carcasse est agencée radialement à l'intérieur de la première couche de carcasse dans le sommet et axialement à l'intérieur de la première couche de carcasse dans chaque flanc.

De tels agencements des première et deuxième couches de carcasse dans les première et deuxième variantes permettent d'obtenir un couplage mécanique efficace entre les première et deuxième couches de carcasse permettant de réduire les cisaillements entre la première et la deuxième couche de carcasse. Ainsi, on réduit la dissipation d'énergie et l'élévation de la température du pneumatique et ce d'autant plus que les cisaillements sont particulièrement élevés à fortes charges.

En outre, grâce à l'agencement particulier des première et deuxième couches de carcasse, on obtient de façon surprenante un pneumatique avec une dissipation d'énergie et une température de fonctionnement optimales dans le flanc, notamment à forte charge et sous une pression inférieure ou égale à la pression recommandée pour un pneumatique de même dimension dans sa version STANDARD LOAD ou EXTRA-LOAD. Ceci est d'autant plus surprenant que l'agencement particulier des première et deuxième couches de carcasse est situé dans une zone du pneumatique, ici dans le bourrelet ou à proximité du bourrelet, et que cela permet de réduire la dissipation d'énergie dans une autre zone du pneumatique, éloignée du bourrelet, ici le flanc. On a découvert que l'agencement particulier de l'armature de carcasse, c'est-à-dire le fait que chaque extrémité axiale de la deuxième couche de carcasse est agencée axialement entre les portions axialement intérieure et extérieure de la première couche de carcasse, ou axialement à l'intérieur de la portion axialement intérieure de la première couche de carcasse, permet de réduire la différence de tensions entre la première couche de carcasse et la deuxième couche de carcasse. Or, plus la différence de tensions entre les première et deuxième couches de carcasse est réduite, moins on génère de cisaillement entre ces première et deuxième couches de carcasse et moins on dissipe d'énergie.

Dans une troisième variante de la première configuration, chaque extrémité axiale de la deuxième couche de carcasse est agencée axialement à l'extérieur de chaque portion axialement extérieure de la première couche de carcasse. Dans cette variante, la deuxième couche de carcasse est agencée radialement à l'extérieur de la première couche de carcasse dans le sommet et axialement à l'extérieur de la première couche de carcasse dans chaque flanc.

Cette troisième variante est particulièrement avantageuse pour les pneumatiques présentant des flancs relativement hauts. En effet, pour des pneumatiques de type HIGH LOAD CAPACITY présentant une hauteur de flanc relativement importante, la tension de l'extrémité de la première couche de carcasse devenant élevée, il est préférable d'envisager une armature de carcasse dans laquelle, à la différence de l'agencement décrit dans les premières et deuxième configurations, chaque extrémité axiale de la deuxième couche de carcasse est agencée axialement à l'extérieur de chaque portion axialement extérieure de la première couche de carcasse. Avec un tel agencement de l'armature de carcasse, on réduira la tension de l'extrémité de la première couche de carcasse à un niveau plus faible.

Dans une deuxième configuration de l'armature de carcasse comprenant des première et deuxième couches de carcasse, chaque bourrelet comprenant au moins des premier et deuxième éléments de renforcement circonférentiels, une portion de chaque première et deuxième couche de carcasse est agencée axialement entre deux des au moins premier et deuxième éléments de renforcement circonférentiels. De telles configurations sont notamment décrites dans WO2021/123522.

Quel que soit le nombre de couche(s) de carcasse de chaque première configuration, dans certaines variantes, chaque extrémité axiale de la couche de carcasse ou de la première couche de carcasse est agencée radialement à l'intérieur de l'équateur du pneumatique et encore plus préférentiellement agencée à une distance radiale inférieure ou égale à 30 mm d'une extrémité radialement intérieure de chaque élément de renforcement circonférentiel de chaque bourrelet.

En agençant chaque extrémité axiale de la couche de carcasse enroulée à l'intérieur de l'équateur du pneumatique, on réduit significativement la masse de l'armature de carcasse. En outre, l'immense majorité des jantes actuellement utilisées pour des pneumatiques pour véhicule de tourisme présente des crochets de type J dont la hauteur est, dans tous les cas inférieure à 30 mm. L'agencement très préférentiel de chaque extrémité axiale dans une zone correspondant radialement sensiblement au crochet de jante permet de protéger mécaniquement chaque extrémité axiale. En effet, si chaque extrémité axiale était agencée radialement trop au-dessus de chaque élément de renforcement circonférentiel de chaque bourrelet, c'est-à-dire à une distance radiale strictement supérieure à 30 mm de l'extrémité radialement intérieure de chaque élément de renforcement circonférentiel, chaque extrémité axiale se retrouverait alors dans une zone flexible du pneumatique soumise à de trop fortes sollicitations, sollicitations qui sont très importantes dans le cas d'un pneumatique de type HIGH LOAD CAPACITY.

Quel que soit le nombre de couche(s) de carcasse de chaque première configuration, dans d'autres variantes, chaque extrémité axiale de la couche de carcasse ou de la première couche de carcasse est agencée radialement à l'extérieur de l'équateur du pneumatique. Avantageusement, dans ces autres modes de réalisation, chaque extrémité axiale de la couche de carcasse ou de la première couche de carcasse est agencée très préférentiellement axialement à l'intérieur d'une extrémité axiale de la ou d'au moins une des couche(s) de sommet de l'armature de sommet.

Dans encore d'autres variantes, l'armature de carcasse comprend une unique couche de carcasse ancrée dans chaque bourrelet et s'étendant radialement dans chaque flanc et axialement dans le sommet radialement intérieurement à l'armature de sommet, le pneumatique comprenant une couche de renfort de flanc s'étendant au moins radialement dans chaque flanc et présentant :
- une extrémité radialement intérieure agencée radialement à l'intérieur de l'équateur du pneumatique,
- une extrémité radialement extérieure agencée radialement à l'extérieur de l'équateur du pneumatique.

Dans ces encore autres variantes, l'invention permet notamment d'éviter l'utilisation d'une deuxième couche de carcasse s'étendant axialement dans le sommet radialement intérieurement à l'armature de sommet. Ainsi, les couches de renfort de flanc sont discontinues sous le sommet du pneumatique.

Une couche de renfort de flanc n'est pas ancrée dans un bourrelet du pneumatique. Ainsi, l'extrémité radialement intérieure de la couche de renfort de flanc est agencée radialement à l'extérieur du bourrelet.

Dans des modes de réalisation avantageux, l'armature de sommet comprend une armature de travail comprenant au moins une couche de travail et une armature de frettage comprenant au moins une couche de frettage, l'armature de frettage étant agencée radialement à l'extérieur de l'armature de travail.

Optionnellement, la ou chaque couche de frettage est délimitée axialement par deux extrémités axiales. La ou chaque couche de frettage comprend un ou plusieurs éléments de renfort de frettage enroulés circonférentiellement hélicoïdalement de façon à s'étendre axialement d'une extrémité axiale à l'autre de la couche de frettage selon une direction principale. De façon optionnelle et préférée, la direction principale forme, avec la direction circonférentielle du pneumatique, un angle, en valeur absolue, inférieur ou égal à 10°, de préférence inférieur ou égal à 7° et plus préférentiellement inférieur ou égal à 5°.

Optionnellement, la couche ou chaque couche de travail est délimitée axialement par deux extrémités axiales. La ou chaque couche de travail comprend des éléments de renfort de travail s'étendant axialement d'une extrémité axiale à l'autre les uns sensiblement parallèlement aux autres selon une direction principale qui, de façon optionnelle et préférée, forme, avec la direction circonférentielle du pneumatique, un angle en valeur absolue, strictement supérieur à 10°, de préférence allant de 15° à 50° et plus préférentiellement allant de 25° à 45°.

De préférence, le ou chaque élément de renfort de frettage, de travail et de carcasse est un élément de renfort filaire.

Par élément de renfort, on entend un élément permettant le renforcement mécanique de la matrice polymérique dans laquelle cet élément de renfort est destiné à être noyé.

De préférence, chaque élément de renfort est filaire, c'est-à-dire que chaque élément de renfort présente une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément de renfort filaire présente la forme d'une bande.

Dans des modes de réalisation optionnels mais avantageux, le pneumatique présente une hauteur de flanc H définie par H=SW x AR / 100 avec SW la largeur de section nominale et AR le rapport d'aspect nominal du pneumatique, un indice de charge LI vérifiant H/LI ≥ 0,85, de préférence H/LI ≥ 0,90 avec SW, AR et LI étant définis selon le manuel de la norme ETRTO 2021. Ainsi, on applique préférentiellement l'invention à des pneumatiques susceptibles d'avoir un comportement dégradé en raison de la hauteur de leurs flancs. En effet, plus le flanc présente une hauteur importante, plus le flanc est susceptible de fléchir de façon relativement importante et ce d'autant plus que son indice de charge est élevé. L'invention permet, pour ces pneumatiques, d'obtenir un comportement satisfaisant.

La largeur de section nominale SW et le rapport d'aspect nominal AR sont ceux du marquage de la dimension inscrite sur le flanc du pneumatique et, par exemple, conformes au manuel de la norme ETRTO 2021.

L'invention sera mieux comprise à la lecture de la description qui va suivre, donnée uniquement à titre d'exemple non limitatif et faite en se référant aux dessins dans lesquels :
- la figure 1 est une vue, dans un plan de coupe méridien parallèle à l'axe de rotation du pneumatique, d'un pneumatique selon un premier mode de réalisation de l'invention,
- la figure 2 est une vue de détails d'un des flancs du pneumatique de la figure 1,
- les figures 3 à 7 sont des vues analogues à celle de la figure 1 de pneumatiques respectivement selon des deuxième, troisième, quatrième, cinquième et sixième modes de réalisation de l'invention, et
- la figure 8 est un graphe illustrant les rigidités de dérive du pneumatique de la figure 1 et d'un pneumatique témoin non conforme à l'invention.

Dans les figures relatives au pneumatique, on a représenté un repère X, Y, Z correspondant aux directions habituelles respectivement axiale (Y), radiale (Z) et circonférentielle (X) d'un pneumatique.

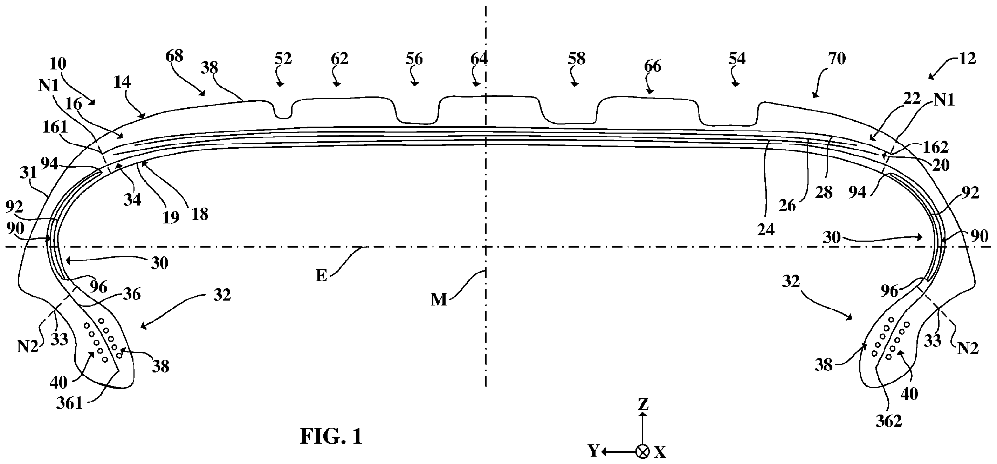

On a représenté sur la figure 1 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 305/35 R23. Sur les différentes figures, le pneumatique 10 est représenté à l'état neuf, c'est-à-dire n'ayant pas encore roulé. Le pneumatique 10 présente une hauteur de flanc H définie par H=SW x AR / 100 avec SW la largeur de section nominale, ici 305, et AR le rapport d'aspect nominal du pneumatique, ici 35, un indice de charge LI ici égal à 114. Ainsi, l'indice de charge vérifie H/LI ≥ 0,85, de préférence H/LI ≥ 0,90 et ici H/LI=0,94. SW, AR et LI sont définis selon le manuel de la norme ETRTO 2021

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche interne d'étanchéité 18 à un gaz de gonflage étant destiné à délimiter une cavité interne avec un support de montage du pneumatique 10 une fois le pneumatique 10 monté sur le support de montage, par exemple une jante, cette cavité étant destinée à être mise sous pression par le gaz de gonflage. La couche interne d'étanchéité 18 porte une surface interne 19 du pneumatique 10. Le pneumatique 10 présente également une surface externe 31.

L'armature de sommet 16 comprend une armature de travail 20 et une armature de frettage 22, chacune de ces armature 20, 22 comprenant au moins une couche de sommet. L'armature de travail 20 comprend au moins une couche de travail et ici comprend deux couches de travail comprenant une couche de travail 24 radialement intérieure agencée radialement à l'intérieur d'une couche de travail 26 radialement extérieure.

L'armature de frettage 22 comprend au moins une couche de frettage et comprend ici une couche de frettage 28.

L'armature de sommet 16 est agencée radialement à l'intérieur de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12. Chaque flanc 30 porte une partie de la surface externe 31 dudit flanc 30.

Le pneumatique 10 comprend une armature de carcasse 34. L'armature de sommet 16 est agencée radialement entre la bande de roulement 14 et l'armature de carcasse 34. L'armature de carcasse 34 comprend au moins une couche de carcasse 36, ici une unique couche de carcasse 36, ancrée dans chaque bourrelet 32. La couche de carcasse 36 s'étend radialement dans chaque flanc 30 et axialement dans le sommet 12, radialement intérieurement à l'armature de sommet 16.

Aux fins d'ancrage de la couche de carcasse 36, le pneumatique 10 comprend un élément de renforcement circonférentiel axialement intérieur 38 agencé axialement à l'intérieur de la couche de carcasse 36 et un élément de renforcement circonférentiel axialement extérieur 40 agencé axialement à l'extérieur de la couche de carcasse 36. Ici chaque élément de renforcement 38, 40 comprend un élément de renforcement filaire continu enroulé sur plusieurs tours circonférentiels, par exemple comme cela est décrit dans WO2021/123522.

L'armature de sommet 16 comprend deux extrémités axiales 161, 162 confondues ici avec les extrémités de la couche de l'armature de sommet 16 axialement la plus large.

Chaque couche de travail 24, 26, de frettage 28 et de carcasse 36 comprend une matrice polymérique, ici élastomérique, dans laquelle sont noyés un ou des éléments de renfort de la couche correspondante, ici des éléments de renfort filaires. La matrice est dite polymérique car à base d'une composition polymérique, cette composition polymérique pouvant comprendre un ou plusieurs polymères, par exemple choisis parmi les polymères thermoplastiques, les polymères thermodurcissables, les élastomères, les élastomères thermoplastiques, mais également des charges et d'autres composants habituellement utilisés dans le domaine des compositions pour pneumatiques, notamment des compositions pour le noyage d'éléments de renfort.

L'armature de frettage 22, ici la couche de frettage 28, est délimitée axialement par deux extrémités axiales, ici les extrémités axiales 161, 162. L'armature de frettage 22 comprend un ou plusieurs éléments de renfort filaires de frettage enroulés circonférentiellement hélicoïdalement de façon à s'étendre axialement d'une extrémité axiale à l'autre de la couche de frettage 28 selon une direction principale D0. La direction principale D0 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

La couche de travail radialement intérieure 24 est délimitée axialement par deux extrémités axiales. La couche de travail radialement intérieure 24 comprend des éléments de renfort filaires de travail s'étendant axialement d'une extrémité axiale à l'autre les uns sensiblement parallèlement aux autres selon une direction principale D1. De façon analogue, la couche de travail radialement extérieure 26 est délimitée axialement par deux extrémités axiales. La couche de travail radialement extérieure 26 comprend des éléments de renfort filaires de travail s'étendant axialement de l'extrémité axiale à l'autre les uns sensiblement parallèlement aux autres selon une direction principale D2. Chaque direction principale D1, D2 forme, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 25° à 45°. Ici, AT1=-33° et AT2=+33°.

La couche de carcasse 36 est délimitée axialement par deux extrémités axiales 361, 362. La couche de carcasse 36 comprend des éléments de renfort filaires de carcasse s'étendant axialement d'une extrémité axiale 361, 362 à l'autre de la couche de carcasse 36 selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage, de travail et de carcasse est, par exemple, identique à ceux décrits dans la demande WO2021/123522.

La bande de roulement 14 comprend une surface de roulement 38 par l'intermédiaire de laquelle la bande de roulement 14 entre en contact avec le sol. La bande de roulement 14 comprend plusieurs découpures circonférentielles, ici plusieurs rainures circonférentielles, comprenant des première, deuxième, troisième et quatrième découpures circonférentielles respectivement désignées par les références 52, 54, 56, 58.

La bande de roulement 14 comprend également plusieurs nervures centrales et ici des première, deuxième et troisième nervures centrales respectivement désignées par les références 62, 64, 66. Chaque nervure centrale 62, 64, 66 est agencée axialement entre deux des découpures circonférentielles adjacentes 52 à 58 et est délimitée axialement par deux découpures circonférentielles adjacentes 52 à 58. La bande de roulement 14 comprend également des première et deuxième nervures latérales 68, 70.

Même si cela n'est pas visible sur la figure 1, chaque nervure centrale 62, 64, 66 et chaque nervure latérale 68, 70 comprend des découpures transversales ménagées dans chaque nervure centrale 62, 64, 66 et chaque nervure latérale 68, 70.

Le pneumatique comprend deux inserts de flanc 90. Chaque insert de flanc 90 est agencé axialement entre la surface externe 31 d'un des flancs 30 et la surface interne 19 dudit flanc 30. Plus précisément, chaque insert de flanc 90 est agencé axialement entre la couche interne d'étanchéité 18 et la couche de carcasse axialement la plus intérieure, ici l'unique couche de carcasse 36. Chaque insert de flanc 90 présente une section en forme générale de croissant.

Chaque insert de flanc 90 comprend au moins une composition élastomérique dite rigide. Ici, chaque insert de flanc 90 comprend une composition élastomérique rigide 92 et en l'espèce est constitué d'une composition élastomérique rigide 92. La composition élastomérique rigide 92 de chaque insert de flanc 90 présente un module MA10 à 10% d'extension supérieur ou égal à 6 MPa et inférieur ou égal à 20 MPa, de préférence à 15 MPa et plus préférentiellement à 13 MPa. Ici, MA10=8 MPa. Afin de formuler cette composition élastomérique rigide, on pourra, par exemple, utiliser l'enseignement de WO2014184158, ou WO2018111773.

Chaque insert de flanc 90 comprend une extrémité radialement extérieure 94 et une extrémité radialement intérieure 96. Chaque extrémité radialement extérieure 94 est agencée radialement à l'extérieur de l'équateur E et radialement et axialement à l'intérieur d'une droite normale N1 à la surface interne 19 et passant par chaque extrémité axialement extérieure 161, 162 de la couche de sommet axialement la plus large de l'armature de sommet 16, ici la couche de frettage 28. Chaque extrémité radialement intérieure 96 est agencée radialement à l'intérieur de l'équateur E et radialement et axialement l'extérieur d'une droite normale N2 à la surface interne 19 et passant par l'extrémité radialement extérieure 33 de la surface externe 31 de chaque bourrelet 32.

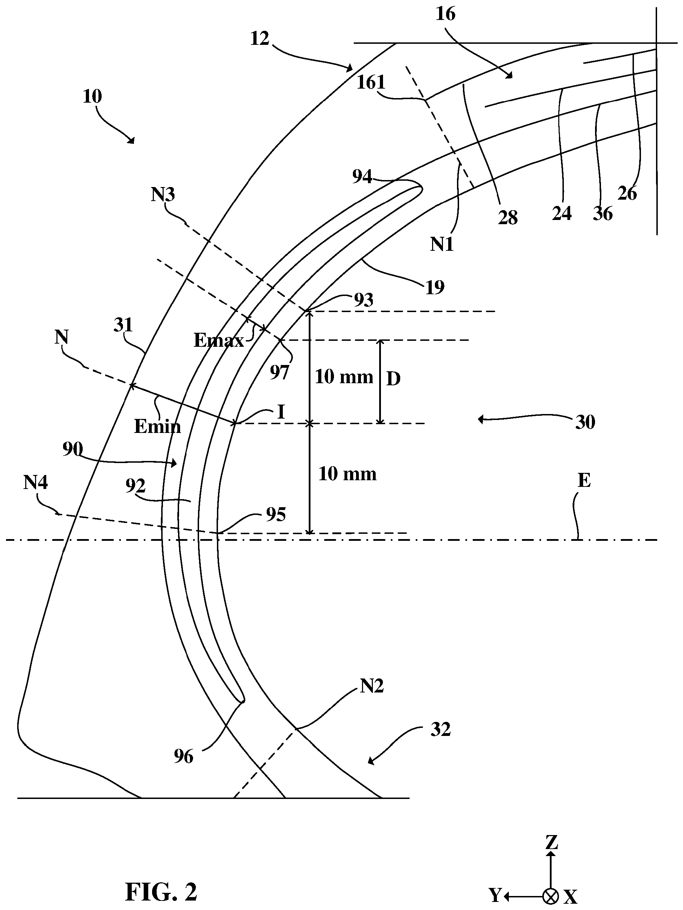

En référence à la figure 2, l'épaisseur de la composition élastomérique rigide 92 et donc ici de l'insert de flanc 90 est maximale radialement à l'extérieur de l'équateur E. En l'espèce, l'épaisseur de la composition élastomérique rigide 92 et donc ici de l'insert de flanc 90 est maximale entre, d'une part, une droite radialement extérieure formée par la normale N3 à la surface interne 19 passant par un point 93 de la surface interne 19 agencé 10 mm radialement à l'extérieur d'un point I et, d'autre part, une droite radialement intérieure formée par la normale N4 à la surface interne 19 passant par un point 95 de la surface interne 19 agencé 10 mm radialement à l'intérieur de ce même point I. Le point I est le point de chaque flanc 30 présentant une épaisseur minimale en ce point I, l'épaisseur du flanc 30 en un point de la surface interne 19 étant définie comme la distance droite selon la normale N à la surface interne 19 en ce point de la surface interne 19 entre ce point de la surface interne 19 et un point de la surface externe du pneumatique aligné selon la normale N avec ce point de la surface interne 19. Ici, le point 97 est le point de la surface interne 19 auquel l'épaisseur de la composition élastomérique rigide 92 et donc ici de l'insert de flanc 90 est maximale, ce point 97 de la surface interne 19 étant agencée radialement entre la droite radialement extérieure N3 et la droite radialement intérieure N4. La distance radiale D entre le point I et le point 97 est égale à 7,6 mm.

L'épaisseur maximale Emax de la composition élastomérique rigide 92 et donc ici de l'insert de flanc 90 est inférieure ou égale à 5,0 mm, de préférence va de 1,0 à 5,0 mm, plus préférentiellement de 1,0 à 3,5 mm et encore plus préférentiellement de 1,0 à 2,5 mm et très préférentiellement de 1,2 à 1,7 mm. Ici, Emax=1,5 mm et l'épaisseur minimale Emin de chaque flanc 30 est telle que Emin=6,5 mm.

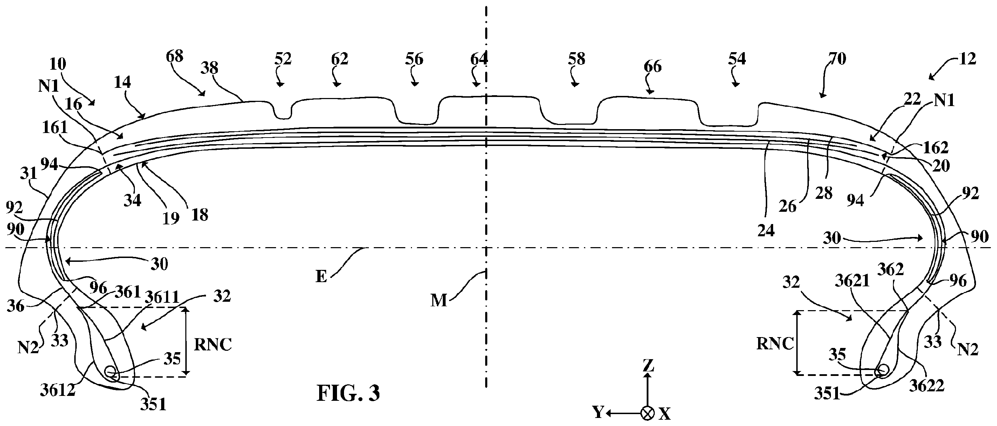

On va maintenant décrire des pneumatiques selon des deuxième, troisième, quatrième, cinquième et sixième modes de réalisation de l'invention respectivement en référence aux figures 3 à 7 sur lesquelles les éléments analogues à ceux représentés sur les figures précédentes sont désignés par des référence identiques.

A la différence du pneumatique selon le premier mode de réalisation, le pneumatique 10 selon le deuxième mode de réalisation de la figure 3 est tel que la couche de carcasse 36 ancrée dans chaque bourrelet 32 forme un enroulement autour d'un élément de renforcement circonférentiel 35 de chaque bourrelet 32, ici une tringle, de sorte qu'une portion axialement intérieure 3611, 3621 de la couche de carcasse 36 ancrée dans chaque bourrelet 32 est agencée axialement à l'intérieur d'une portion axialement extérieure 3612, 3622 de la couche de carcasse 36 ancrée dans chaque bourrelet 32 et de sorte que chaque extrémité axiale 361, 362 délimitant axialement la couche de carcasse 36 ancrée dans chaque bourrelet 32 soit agencée radialement à l'extérieur de chaque élément de renforcement circonférentiel 35. Chaque extrémité axiale 361, 362 de la couche de carcasse 36 ancrée dans chaque bourrelet 32 est agencée radialement à l'intérieur de l'équateur E du pneumatique. Plus précisément, chaque extrémité axiale 361, 362 de la couche de carcasse 36 ancrée dans chaque bourrelet 32 est agencée à une distance radiale RNC inférieure ou égale à 30 mm d'une extrémité radialement intérieure 351 de chaque élément de renforcement circonférentiel 33 de chaque bourrelet 32. Ici RNC=23 mm.

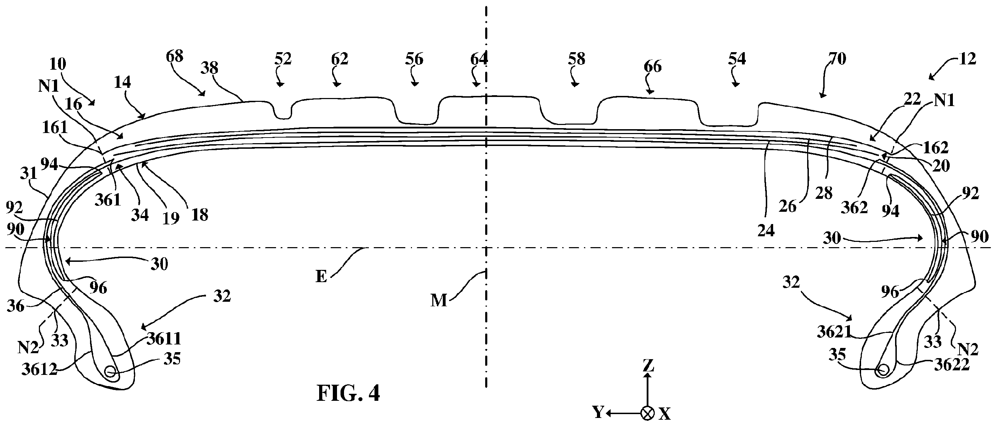

A la différence du pneumatique selon le deuxième mode de réalisation, le pneumatique 10 selon le troisième mode de réalisation de la figure 4 est tel que chaque extrémité axiale 361, 362 de la couche de carcasse 36 est agencée radialement à l'extérieur de l'équateur E. Ici, chaque extrémité axiale 361, 362 de la couche de carcasse 36 est agencée très préférentiellement axialement à l'intérieur de chaque extrémité axiale 161, 162 de la couche de frettage 28.

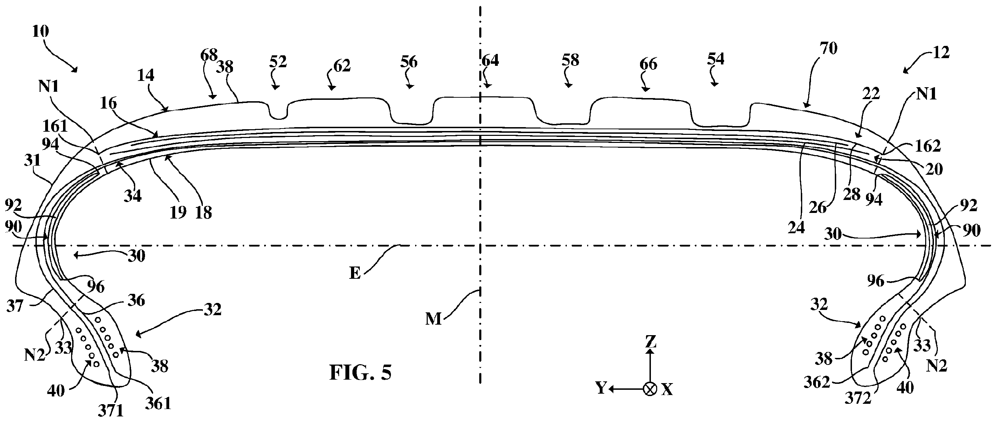

A la différence des pneumatiques selon les précédents modes de réalisation, l'armature de carcasse 34 du pneumatique 10 selon le quatrième mode de réalisation de la figure 5 comprend des première et deuxième couches 36, 37 de carcasse ancrées dans chaque bourrelet 32 et s'étendant radialement dans chaque flanc 30 et axialement dans le sommet 12 radialement intérieurement à l'armature de sommet 16. La deuxième couche de carcasse 37 est agencée axialement à l'extérieur de la première couche de carcasse 36 dans chaque flanc et radialement à l'extérieur de la première couche de carcasse 37 dans le sommet 12.

La deuxième couche de carcasse 37 est délimitée axialement par deux extrémités axiales 371, 372. La deuxième couche de carcasse 37 comprend des éléments de renfort filaires de carcasse s'étendant axialement d'une extrémité axiale 371, 372 à l'autre de la deuxième couche de carcasse 37 selon une direction principale D4 formant avec la direction circonférentielle X du pneumatique 10, un angle AC, en valeur absolue, supérieur ou égal à 60°, de préférence allant de 80° à 90° et ici AC=+90°.

L'insert de flanc 90 est agencé axialement à l'intérieur de la première couche de carcasse 36. Une portion de chaque première et deuxième couche de carcasse 36, 37 est agencée axialement entre les éléments de renforcement circonférentiels 38, 40.

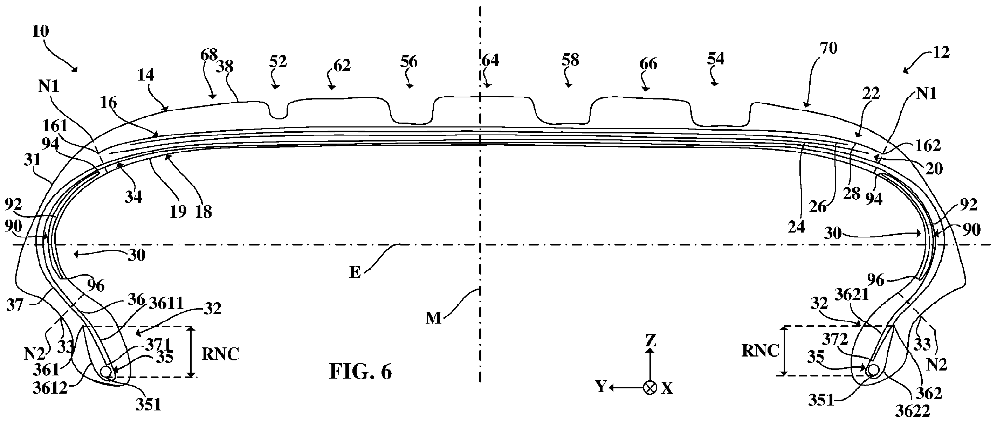

A la différence du pneumatique selon le quatrième mode de réalisation, le pneumatique 10 selon le cinquième mode de réalisation de la figure 6 est tel que la première couche de carcasse 36 est agencée comme dans le deuxième mode de réalisation illustré à la figure 3. En outre, chaque extrémité axiale 371, 372 de la deuxième couche de carcasse 37 est agencée axialement entre les portions axialement intérieure 3611, 3621 et extérieure 3612, 3622 de la première couche de carcasse 36. La deuxième couche de carcasse 37 est agencée radialement à l'extérieur de la première couche de carcasse 36 dans le sommet 12.

D'autres variantes d'agencement de la deuxième couche de carcasse 37 sont possibles comme cela a été décrits précédemment dans la description générique de la présente demande.

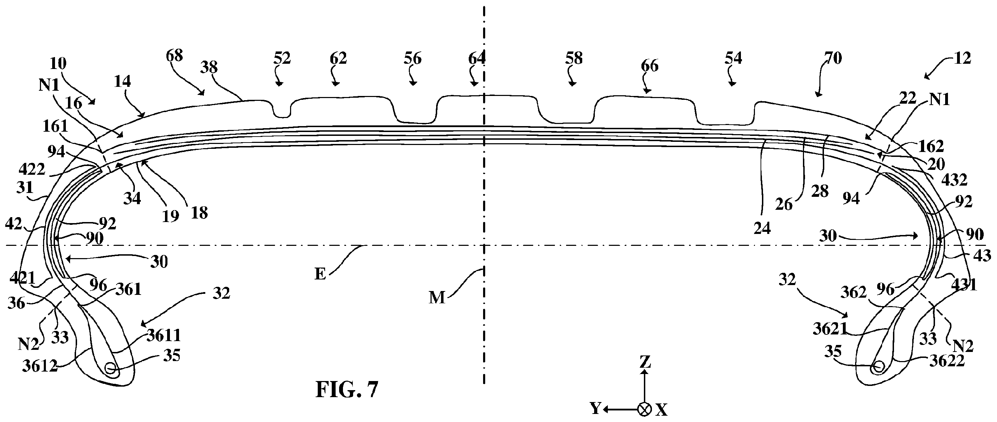

A la différence des premier et deuxième modes de réalisation, le pneumatique 10 selon le sixième mode de réalisation de la figure 7 comprend deux couches de renfort de flanc 42, 43 s'étendant au moins radialement dans chaque flanc 30 et présentant une extrémité radialement intérieure 421, 431 agencée radialement à l'intérieur de l'équateur E et une extrémité radialement extérieure 422, 432 agencée radialement à l'extérieur de l'équateur E. Le pneumatique 10 comprend donc deux couches de renfort de flanc 42, 43 qui sont discontinues sous le sommet 12.

### Essais comparatifs

On a comparé le pneumatique 10 selon le premier mode de réalisation et conforme à l'invention et un pneumatique de référence T1 non conforme à l'invention dépourvu d'insert de flanc.

On a testé les pneumatiques 10 et T1 afin de mesurer leur rigidité de dérive ainsi que leur comportement lors d'un test subjectif permettant d'évaluer le comportement d'un véhicule équipé des pneumatiques.

Les tests subjectifs ont été réalisés sur circuit en équipant un véhicule Range Rover Sport SVR des différents pneumatiques 10 et T1 sur l'essieu arrière. Ainsi équipé, la charge appliquée sur l'essieu arrière était égale à environ 1576 kg, soit environ 788 kg par pneumatique.

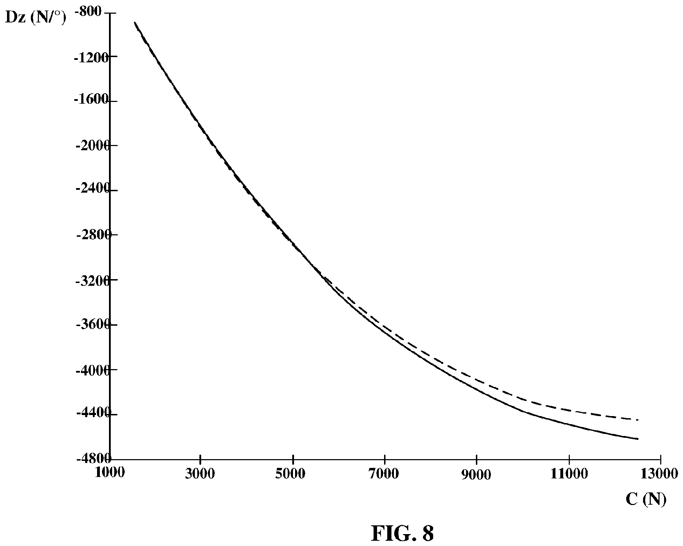

Concernant la rigidité de dérive, la figure 8 représente la rigidité de dérive Dz, exprimée en N/° en fonction de la charge appliquée C, exprimée en N. La ligne en tirets indique la variation de la rigidité de dérive du pneumatique témoin T1 alors que la ligne continue indique la variation de la rigidité de dérive du pneumatique 10. On constate qu'à partir d'une charge environ égale à 5000 N, le pneumatique 10 selon l'invention présente une rigidité de dérive significativement améliorée par rapport au pneumatique témoin T1. On note que l'amélioration de la rigidité de dérive est d'autant plus importante que la charge appliquée est importante, en particulier à la charge appliquée à chaque pneumatique lorsque celui-ci est monté sur le véhicule, ici 7730 N.

Concernant le test subjectif, le pilote a conclu que lorsque le véhicule était équipé des pneumatiques témoins T1, le véhicule était instable en lacet et sa réponse en virage fortement non linéaire. L'essieu arrière était caractérisé par un manque de poussée, par un temps de montée en lacet long ainsi que par un faible amortissement du lacet. Le temps de montée en lacet est le temps de montée en charge de la poussée de dérive. Lorsque le véhicule était équipé des pneumatiques 10 selon l'invention, le pilote a conclu à un essieu arrière bien plus rigide conduisant à un temps de montée en lacet court.

Ainsi, le test subjectif confirme l'amélioration du comportement du véhicule que l'on pouvait attendre de l'amélioration de la rigidité de dérive.

L'invention ne se limite pas aux modes de réalisation décrits précédemment.

## Revendications

1. Pneumatique (10) pour véhicule de tourisme comprenant un sommet (12), deux bourrelets (32), deux flancs (30) reliant chaque bourrelet (32) au sommet (12), le pneumatique (10) comprenant un insert de flanc (90) agencé axialement entre une surface externe (31) d'au moins un des flancs (30) et une surface interne (19) dudit flanc (30), **caractérisé en ce que** le pneumatique (10) est du type HIGH LOAD CAPACITY selon le manuel de la norme ETRTO 2021, et **en ce que** l'insert de flanc (90) comprend au moins une composition élastomérique (92) dite rigide, la ou chaque composition élastomérique rigide (92) de l'insert de flanc (90) présentant un module à 10% d'extension (MA10) supérieur ou égal à 6 MPa, l'épaisseur maximale (Emax) de la composition élastomérique rigide (92) ou de l'assemblage des compositions élastomériques rigides étant inférieure ou égale à 5,0 mm.

2. Pneumatique (10) selon la revendication précédente, dans lequel le module à 10% d'extension (MA10) de la ou chaque composition élastomérique rigide (92) est inférieur ou égal à 20 MPa, de préférence à 15 MPa et plus préférentiellement à 13 MPa.

3. Pneumatique (10) selon l'une quelconque des revendications précédentes, dans lequel l'épaisseur maximale (Emax) de la composition élastomérique rigide (92) ou de l'assemblage des compositions élastomériques rigides va de 1,0 à 5,0 mm, de préférence de 1,0 à 3,5 mm et plus préférentiellement de 1,0 à 2,5 mm et encore plus préférentiellement de 1,2 à 1,7 mm.

4. Pneumatique (10) selon l'une quelconque des revendications précédentes, dans lequel, le ou chaque flanc (30) présentant une épaisseur minimale (Emin) en un point I, l'épaisseur du flanc en un point de la surface interne (19) étant définie comme la distance droite selon la normale (N) à la surface interne (19) audit point de la surface interne (19) entre ledit point de la surface interne (19) et un point de la surface externe (31) du pneumatique aligné selon la normale (N) avec ledit point de la surface interne,
le point (97) de la surface interne (19) auquel l'épaisseur de la composition élastomérique rigide (92) ou de l'assemblage des compositions élastomériques rigides est maximale est agencé radialement entre :
- une droite radialement extérieure formée par la normale (N3) à la surface interne (19) passant par un point (93) de la surface interne (19) agencé 10 mm radialement à l'extérieur du point I,
- une droite radialement intérieure formée par la normale (N4) à la surface interne (19) passant par un point (95) de la surface interne (19) agencé 10 mm radialement à l'intérieur du point I.

5. Pneumatique (10) selon l'une quelconque des revendications précédentes, dans lequel l'épaisseur de la composition élastomérique rigide (92) ou de l'assemblage des compositions élastomériques rigides est maximale radialement à l'extérieur de l'équateur (E) du pneumatique, l'équateur (E) du pneumatique étant, dans un plan de coupe méridien, l'axe parallèle à l'axe de rotation du pneumatique et situé à équidistance entre le point radialement le plus extérieur de la bande de roulement destiné à être au contact avec le sol et le point radialement le plus intérieur du pneumatique destiné à être en contact avec un support.

6. Pneumatique (10) selon l'une quelconque des revendications précédentes, dans lequel l'extrémité radialement extérieure (94) de l'insert de flanc (90) est agencée radialement à l'extérieur de l'équateur (E) du pneumatique, l'équateur (E) du pneumatique étant, dans un plan de coupe méridien, l'axe parallèle à l'axe de rotation du pneumatique et situé à équidistance entre le point radialement le plus extérieur de la bande de roulement destiné à être au contact avec le sol et le point radialement le plus intérieur du pneumatique destiné à être en contact avec un support.

7. Pneumatique selon l'une quelconque des revendications précédentes, dans lequel l'extrémité radialement intérieure (96) de l'insert de flanc (90) est agencée radialement à l'intérieur de l'équateur (E) du pneumatique, l'équateur (E) du pneumatique étant, dans un plan de coupe méridien, l'axe parallèle à l'axe de rotation du pneumatique et situé à équidistance entre le point radialement le plus extérieur de la bande de roulement destiné à être au contact avec le sol et le point radialement le plus intérieur du pneumatique destiné à être en contact avec un support.

8. Pneumatique (10) selon l'une quelconque des revendications précédentes, comprenant une armature de carcasse (34) comprenant au moins une couche de carcasse (36) ancrée dans le ou chaque bourrelet (32) et s'étendant radialement dans le ou chaque flanc (30) et axialement dans le sommet (12) radialement intérieurement à l'armature de sommet (16).

9. Pneumatique (10) selon la revendication précédente, comprenant une couche interne d'étanchéité (18) portant la surface interne (19) du pneumatique, l'insert de flanc (90) est agencé axialement entre la couche interne d'étanchéité (18) et la couche de carcasse (36) axialement la plus intérieure.

10. Pneumatique (10) selon la revendication 8 ou 9, dans lequel l'armature de carcasse (34) comprend une unique couche de carcasse (36) ancrée dans le ou chaque bourrelet (32) et s'étendant radialement dans chaque flanc (30) et axialement dans le sommet (12) radialement intérieurement à l'armature de sommet (16).

11. Pneumatique (10) selon la revendication 8 ou 9, dans lequel l'armature de carcasse (34) comprend des première et deuxième couches de carcasse (36, 37) ancrées dans le ou chaque bourrelet (32) et s'étendant radialement dans chaque flanc (30) et axialement dans le sommet (12) radialement intérieurement à l'armature de sommet (16), l'insert de flanc (90) est agencé axialement à l'intérieur de la première couche de carcasse (36).

12. Pneumatique (10) selon l'une quelconque des revendications précédentes, présentant une hauteur de flanc H définie par H=SW x AR / 100 avec SW la largeur de section nominale et AR le rapport d'aspect nominal du pneumatique, un indice de charge LI vérifiant H/LI ≥ 0,85, de préférence H/LI ≥ 0,90 avec SW, AR et LI étant définis selon le manuel de la norme ETRTO 2021.

## Patentansprüche

1. Reifen (10) für einen Personenkraftwagen, beinhaltend einen Scheitel (12), zwei Wülste (32), zwei Seitenwände (30), die jeden Wulst (32) mit dem Scheitel (12) verbinden, wobei der Reifen (10) einen Seitenwandeinsatz (90) beinhaltet, der axial zwischen einer Außenoberfläche (31) mindestens einer der Seitenwände (30) und einer Innenoberfläche (19) der Seitenwand (30) angeordnet ist, **dadurch gekennzeichnet, dass** der Reifen (10) vom Typ HIGH LOAD CAPACITY gemäß dem Handbuch der Norm ETRTO 2021 ist und dass der Seitenwandeinsatz (90) mindestens eine als steif bezeichnete Elastomerzusammensetzung (92) beinhaltet, wobei die oder jede steife Elastomerzusammensetzung (92) des Seitenwandeinsatzes (90) einen Modul bei 10 % Dehnung (MA10) größer als oder gleich 6 MPa aufweist, wobei die maximale Dicke (Emax) der steifen Elastomerzusammensetzung (92) oder der Anordnung von steifen Elastomerzusammensetzungen kleiner als oder gleich 5,0 mm ist.

2. Reifen (10) nach dem vorhergehenden Anspruch, wobei der Modul bei 10 % Dehnung (MA10) der oder jeder steifen Elastomerzusammensetzung (92) kleiner als oder gleich 20 MPa, vorzugsweise 15 MPa und bevorzugter 13 MPa ist.

3. Reifen (10) nach einem der vorhergehenden Ansprüche, wobei die maximale Dicke (Emax) der steifen Elastomerzusammensetzung (92) oder der Anordnung von steifen Elastomerzusammensetzungen von 1,0 bis 5,0 mm, vorzugsweise von 1,0 bis 3,5 mm und bevorzugter von 1,0 bis 2,5 mm und noch bevorzugter von 1,2 bis 1,7 mm beträgt.

4. Reifen (10) nach einem der vorhergehenden Ansprüche, wobei, wenn die oder jede Seitenwand (30) an einem Punkt I eine minimale Dicke (Emin) aufweist und die Dicke der Seitenwand an einem Punkt der Innenoberfläche (19) als der gemäß der Normalen (N) der Innenoberfläche (19) an dem Punkt der Innenoberfläche (19) senkrechte Abstand zwischen dem Punkt der Innenoberfläche (19) und einem Punkt der Außenoberfläche (31) des Reifens, der gemäß der Normalen (N) nach dem Punkt der Innenoberfläche ausgerichtet ist, definiert ist,
der Punkt (97) der Innenoberfläche (19), an dem die Dicke der steifen Elastomerzusammensetzung (92) oder der Anordnung von steifen Elastomerzusammensetzungen maximal ist, radial zwischen Folgendem angeordnet ist:
- einer radial äußeren Senkrechten, die durch die Normale (N3) der Innenoberfläche (19) gebildet wird, die durch einen Punkt (93) der Innenoberfläche (19) verläuft, der 10 mm radial außerhalb des Punkts I angeordnet ist,
- einer radial inneren Senkrechten, die durch die Normale (N4) der Innenoberfläche (19) gebildet wird, die durch einen Punkt (95) der Innenoberfläche (19) verläuft, der 10 mm radial innerhalb des Punkts I angeordnet ist.

5. Reifen (10) nach einem der vorhergehenden Ansprüche, wobei die Dicke der steifen Elastomerzusammensetzung (92) oder der Anordnung von steifen Elastomerzusammensetzungen radial außerhalb des Äquators (E) des Reifens maximal ist, wobei der Äquator (E) des Reifens in einer Meridianschnittebene die Achse ist, die zu der Rotationsachse des Reifens parallel ist und sich äquidistant zwischen dem radial äußersten Punkt des Laufstreifens, der dazu bestimmt ist, mit dem Boden in Kontakt zu sein, und dem radial innersten Punkt des Reifens, der dazu bestimmt ist, mit einem Träger in Kontakt zu sein, befindet.

6. Reifen (10) nach einem der vorhergehenden Ansprüche, wobei das radial äußere Ende (94) des Seitenwandeinsatzes (90) radial außerhalb des Äquators (E) des Reifens angeordnet ist, wobei der Äquator (E) des Reifens in einer Meridianschnittebene die Achse ist, die zu der Rotationsachse des Reifens parallel ist und sich äquidistant zwischen dem radial äußersten Punkt des Laufstreifens, der dazu bestimmt ist, mit dem Boden in Kontakt zu sein, und dem radial innersten Punkt des Reifens, der dazu bestimmt ist, mit einem Träger in Kontakt zu sein, befindet.

7. Reifen nach einem der vorhergehenden Ansprüche, wobei das radial innere Ende (96) des Seitenwandeinsatzes (90) radial innerhalb des Äquators (E) des Reifens angeordnet ist, wobei der Äquator (E) des Reifens in einer Meridianschnittebene die Achse ist, die zu der Rotationsachse des Reifens parallel ist und sich äquidistant zwischen dem radial äußersten Punkt des Laufstreifens, der dazu bestimmt ist, mit dem Boden in Kontakt zu sein, und dem radial innersten Punkt des Reifens, der dazu bestimmt ist, mit einem Träger in Kontakt zu sein, befindet.

8. Reifen (10) nach einem der vorhergehenden Ansprüche, beinhaltend eine Karkassenbewehrung (34), die mindestens eine Karkassenlage (36) beinhaltet, die in dem oder jedem Wulst (32) verankert ist und sich radial in der oder jeder Seitenwand (30) und axial in dem Scheitel (12) radial innerhalb der Scheitelbewehrung (16) erstreckt.

9. Reifen (10) nach dem vorhergehenden Anspruch, beinhaltend eine innere Dichtungslage (18), die die Innenoberfläche (19) des Reifens trägt, wobei der Seitenwandeinsatz (90) axial zwischen der inneren Dichtungslage (18) und der axial innersten Karkassenlage (36) angeordnet ist.

10. Reifen (10) nach Anspruch 8 oder 9, wobei die Karkassenbewehrung (34) eine einzige Karkassenlage (36) beinhaltet, die in dem oder jedem Wulst (32) verankert ist und sich radial in jeder Seitenwand (30) und axial in dem Scheitel (12) radial innerhalb der Scheitelbewehrung (16) erstreckt.

11. Reifen (10) nach Anspruch 8 oder 9, wobei die Karkassenbewehrung (34) eine erste und eine zweite Karkassenlage (36, 37) beinhaltet, die in dem oder jedem Wulst (32) verankert sind und sich radial in jeder Seitenwand (30) und axial in dem Scheitel (12) radial innerhalb der Scheitelbewehrung (16) erstrecken, wobei der Seitenwandeinsatz (90) axial innerhalb der ersten Karkassenlage (36) angeordnet ist.

12. Reifen (10) nach einem der vorhergehenden Ansprüche, der eine Seitenwandhöhe H aufweist, die durch H=SW x AR / 100 definiert ist, wobei SW die Nennquerschnittsbreite und AR das Nennquerschnittsverhältnis des Reifens ist, wobei ein Lastindex LI H/LI ≥ 0,85, vorzugsweise H/LI ≥ 0,90 erfüllt, wobei SW, AR und LI gemäß dem Handbuch der Norm ETRTO 2021 definiert sind.

## Claims

1. Tyre (10) for a passenger vehicle, comprising a crown (12), two beads (32), two sidewalls (30) connecting each bead (32) to the crown (12), the tyre (10) comprising a sidewall insert (90) arranged axially between an exterior surface (31) of at least one of the sidewalls (30) and an interior surface (19) of said sidewall (30), **characterized in that** the tyre (10) is of the HIGH LOAD CAPACITY type according to the ETRTO Standards Manual, 2021 and **in that** the sidewall insert (90) comprises at least one elastomeric composition (92) referred to as rigid, the or each rigid elastomeric composition (92) of the sidewall insert (90) having a modulus at 10% extension (MA10) that is greater than or equal to 6 MPa, the maximum thickness (Emax) of the rigid elastomeric composition (92) or of the assembly of rigid elastomeric compositions being less than or equal to 5.0 mm.

2. Tyre (10) according to the preceding claim, wherein the modulus at 10% extension (MA10) of the or each rigid elastomeric composition (92) is less than or equal to 20 MPa, preferably less than or equal to 15 MPa and more preferentially less than or equal to 13 MPa.

3. Tyre (10) according to either one of the preceding claims, wherein the maximum thickness (Emax) of the rigid elastomeric composition (92) or of the assembly of rigid elastomeric compositions ranges from 1.0 to 5.0 mm, preferably from 1.0 to 3.5 mm, more preferentially from 1.0 to 2.5 mm, and more preferentially still, from 1.2 to 1.7 mm.

4. Tyre (10) according to any one of the preceding claims, wherein, with the or each sidewall (30) having a minimum thickness (Emin) at a point I, the thickness of the sidewall at a point on the interior surface (19) being defined as the straight-line distance along the normal (N) to the interior surface (19) at said point on the interior surface (19) between said point on the interior surface (19) and a point on the exterior surface (31) of the tyre that is aligned, along the normal (N), with said point on the interior surface,
the point (97) on the interior surface (19) at which the thickness of the rigid elastomeric composition (92) or of the assembly of rigid elastomeric compositions is at a maximum is arranged radially between:
- a radially exterior straight line formed by the normal (N3) to the interior surface (19) passing through a point (93) on the interior surface (19) arranged 10 mm radially to the outside of the point I,
- a radially interior straight line formed by the normal (N4) to the interior surface (19) passing through a point (95) on the interior surface (19) arranged 10 mm radially to the inside of the point I.

5. Tyre (10) according to any one of the preceding claims, wherein the thickness of the rigid elastomeric composition (92) or of the assembly of rigid elastomeric compositions is at a maximum radially to the outside of the equator (E) of the tyre, the equator of the tyre being, in a meridian section plane, the axis parallel to the axis of rotation of the tyre and situated equidistantly between the radially outermost point of the tread that is intended to be in contact with the ground and the radially innermost point of the tyre that is intended to be in contact with a support.

6. Tyre (10) according to any one of the preceding claims, wherein the radially exterior end (94) of the sidewall insert (90) is arranged radially to the outside of the equator (E) of the tyre, the equator of the tyre being, in a meridian section plane, the axis parallel to the axis of rotation of the tyre and situated equidistantly between the radially outermost point of the tread that is intended to be in contact with the ground and the radially innermost point of the tyre that is intended to be in contact with a support.

7. Tyre according to any one of the preceding claims, wherein the radially interior end (96) of the sidewall insert (90) is arranged radially to the inside of the equator (E) of the tyre, the equator of the tyre being, in a meridian section plane, the axis parallel to the axis of rotation of the tyre and situated equidistantly between the radially outermost point of the tread that is intended to be in contact with the ground and the radially innermost point of the tyre that is intended to be in contact with a support.

8. Tyre (10) according to any one of the preceding claims, comprising a carcass reinforcement (34) comprising at least one carcass layer (36) anchored in the or each bead (32) and extending radially in the or each sidewall (30) and axially in the crown (12) radially to the inside of the crown reinforcement (16).

9. Tyre (10) according to the preceding claim, comprising an inner-liner layer (18) bearing the interior surface (19) of the tyre, the sidewall insert (90) being arranged axially between the inner-liner layer (18) and the axially innermost carcass layer (36).

10. Tyre (10) according to Claim 8 or 9, wherein the carcass reinforcement (34) comprises a single carcass layer (36) anchored in the or each bead (32) and extending radially in each sidewall (30) and axially in the crown (12) radially to the inside of the crown reinforcement (16).

11. Tyre (10) according to Claim 8 or 9, wherein the carcass reinforcement (34) comprises first and second carcass layers (36, 37) anchored in the or each bead (32) and extending radially in each sidewall (30) and axially in the crown (12) radially to the inside of the crown reinforcement (16), the sidewall insert (90) being arranged axially to the inside of the first carcass layer (36).

12. Tyre (10) according to any one of the preceding claims, having a sidewall height H defined by H=SW x AR / 100 where SW is the nominal section width and AR is the nominal aspect ratio of the tyre, a load index LI satisfying H/LI ≥ 0.85, preferably H/LI ≥ 0.90 where SW, AR and LI are defined in accordance with the ETRTO Standards Manual, 2021.
